# EUROPÄISCHE PATENTSCHRIFT

(11) **EP 1 748 878 B1**
(45) Veröffentlichungstag und Bekanntmachung des Hinweises auf die Patenterteilung: **28.04.2010**
(21) Anmeldenummer: 06706968.2
(22) Anmeldetag: 15.02.2006
(51) Int. Cl.: B29C 67/00, B29C 35/02

(54) **VORRICHTUNG UND VERFAHREN ZUM HERSTELLEN EINES DREIDIMENSIONALEN OBJEKTS**
DEVICE AND METHOD FOR THE PRODUCTION OF A THREE-DIMENSIONAL OBJECT
DISPOSITIF ET PROCEDE DE PRODUCTION D'UN OBJET TRIDIMENSIONNEL

(30) Priorität: 06.04.2005 DE 102005015870
(43) Veröffentlichungstag der Anmeldung: 07.02.2007
(73) Patentinhaber: EOS GmbH Electro Optical Systems, 82152 Krailling (DE)
(72) Erfinder: PHILIPPI, Jochen, 81377 München (DE); HALDER, Thomas, 81371 München (DE); MATTES, Thomas, 82205 Gilching (DE)
(74) Vertreter: Hofer, Dorothea
(86) Internationale Anmeldenummer: PCT/EP2006/001366
(87) Internationale Veröffentlichungsnummer: WO 2006/105827

(56) Entgegenhaltungen:
- EP-A- 1 466 718
- US-A- 5 530 221
- US-A- 5 908 569
- US-A1- 2004 005 182
- US-A1- 2004 026 807

## Beschreibung

Die vorliegende Erfindung bezieht sich auf eine Vorrichtung und ein Verfahren zum Herstellen eines dreidimensionalen Objekts nach dem Oberbegriff des Patentanspruchs 1 bzw. 10.

Eine derartige Vorrichtung und ein derartiges Verfahren sind aus der DE 100 07 711 C1 bekannt. Dort wird eine Lasersintervorrichtung beschrieben, bei der die Temperatur des Sinterpulvers in einer beweglichen Erfassungsfläche im Bereich der Sinterstelle mit einem Pyrometer erfasst und die Leistung des Lasers in Abhängigkeit von der erfassten Temperatur geregelt wird.

Die durch das Pyrometer gemessene Temperatur ist dabei maßgeblich durch die Wärmestrahlung der Sinterstelle beeinflusst. Je nach Belichtungsgrad des Pulvers ändert sich das Emissionsvermögen der Oberfläche (Verhältnis der von der Oberfläche abgestrahlten Strahlungsenergie zu der von einem schwarzen Körper bei gleicher Temperatur abgestrahlten Strahlungsenergie), wodurch das Messergebnis verfälscht wird. Weiter ist die Temperaturmessung durch reflektierte Laserstrahlung verfälscht. Die so gemessene Temperatur stellt daher kein gutes Maß für die Temperatur der Oberfläche des Pulverbetts dar. Die Temperatur der Oberfläche des Pulverbetts ist aber je nach verwendetem Aufbaumaterial (Sinterpulver) beim Lasersintern ein für die Qualität des hergestellten Bauteils entscheidender Parameter.

Aus der EP 1 466 718 A2 und aus der EP 1 296 788 B1 ist jeweils eine Vorrichtung zum Herstellen eines dreidimensionalen Objekts bekannt, bei der die Temperatur der Oberfläche des Pulverbetts im gesamten Arbeitsbereich gleichzeitig mittels einer IR-Kamera ortsaufgelöst gemessen wird. Ein Problem dabei ist, dass in der Vorrichtung die Optik der IR-Kamera verschmutzt werden kann. Diese Verschmutzung, die sich durch Freiblasen nicht vollständig vermeiden lässt, führt dazu, dass die Messergebnisse ortsabhängig verfälscht werden können. Ein weiterer Nachteil dieser Temperaturmessung ist der hohe Preis der IR-Kamera gegenüber anderen berührungslosen Temperaturmessgeräten wie z.B. einem Pyrometer.

US-A-5530221 offenbart eine Vorrichtung gemäß dem Oberbegriff des Anspruchs 1 und ein Verfahren gemäß dem Oberbegriff des Anspruchs 10.

Der vorliegenden Erfindung liegt daher die Aufgabe zugrunde, eine einfach zu handhabende kostengünstige Vorrichtung und ein einfaches und kostengünstiges Verfahren zum Herstellen eines dreidimensionalen Objekts durch Verfestigen von Schichten eines Aufbaumaterials an den dem jeweiligen Querschnitt des Objekts entsprechenden Stellen durch Einwirken von elektromagnetischer oder Teilchenstrahlung bereitzustellen, mit denen sich dreidimensionale Objekte hoher Qualität zuverlässig herstellen lassen.

Die Aufgabe wird erfüllt durch eine Vorrichtung zum Herstellen eines dreidimensionalen Objekts nach Anspruch 1 und durch ein Verfahren zum Herstellen eines dreidimensionalen Objekts nach Anspruch 10. Weiterbildungen der Erfindung sind in den Unteransprüchen beschrieben.

Die Erfindung weist insbesondere den Vorteil auf, dass sich die Temperatur des zu verfestigenden Aufbaumaterials ohne Einfluss durch die in das Aufbaumaterial durch elektromagnetische oder Teilchenstrahlung zur Verfestigung eingebrachte Strahlungsenergie messen und daher sehr genau steuern und/ oder regeln lässt.

Die Erfindung weist weiter den Vorteil auf, dass ein einfaches und kostengünstiges Punktpyrometer zur Temperaturmessung verwendet werden kann, das im Gegensatz zu einer IR-Kamera keiner Kühlung bedarf. Darüber hinaus wird für ein Punktpyrometer ein wesentlich kleineres Fenster in der Prozesskammer benötigt als etwa für eine IR-Kamera. Ein kleines Fenster lässt sich wiederum wesentlich leichter durch Freiblasen von Verschmutzung durch Prozessgase freihalten und verringert das Risiko der Schädigung der Temperaturmesseinrichtung durch Laserrückreflexion, wenn als Strahlungsquelle ein Laser verwendet wird.

Die Erfindung hat weiter den Vorteil, dass der Messbereich in jeder Schicht frei wählbar ist, also verändert werden kann. Es muss nicht in jeder Schicht ein gleich bleibender bestimmter Bereich des Baufelds für die Temperaturmessung frei gehalten werden, sondern es kann aktiv in jeder Schicht ein freibleibender Bereich an beliebiger Stelle des Baufelds für die Temperaturmessung verwendet werden. Dadurch ist eine bessere Ausnutzung des Baufelds gegenüber der Temperaturmessung mit einem festen Punktpyrometer ohne Lageeinstelleinrichtung möglich.

Ein weiterer Vorteil der Erfindung besteht darin, dass in einer Schicht des Aufbaumaterials ein Temperaturprofil erfasst werden kann, das dann für eine lokale Laserleistungskorrektur verwendet werden kann, um so die eingebrachte Strahlungsenergie genauer auf ein optimales Prozessfenster einzustellen. Dies führt zu einer höheren Bauteilqualität.

Darüber hinaus kann die Temperaturverteilung als Eingangsgröße für die Steuerung einer ortsabhängigen Heizung des Pulverbettes verwendet werden. Der Ausgleich lokaler Temperaturschwankungen führt zu einer höheren Bauteilqualität.

Weitere Merkmale und Zweckmäßigkeiten der Erfindung ergeben sich aus der Beschreibung von Ausführungsbeispielen anhand der beigefügten Zeichnungen.

Von den Figuren zeigen:
- Fig. 1: eine schematische Darstellung eines Ausführungsbeispiels der Vorrichtung zum Herstellen eines dreidimensionalen Objekts;
- Fig. 2: eine Teilschnittdarstellung einer Ausführungsform der Temperaturmesseinrichtung; und
- Fig. 3: eine schematische Darstellung eines Ausschnitts der Vorrichtung aus Fig. 1.

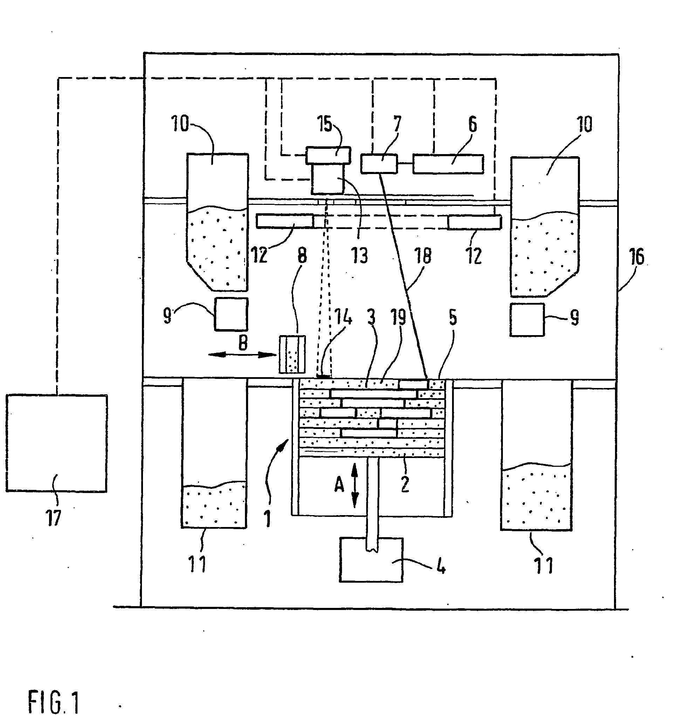

Fig. 1 zeigt eine Lasersintervorrichtung als Ausführungsbeispiel einer erfindungsgemäßen Vorrichtung. Die Lasersintervorrichtung weist einen nach oben offenen Behälter 1 auf. In dem Behälter 1 ist ein Träger 2 zum Tragen des zu bildenden Objekts 3 vorgesehen. Der Träger 2 ist mittels eines Antriebs 4 in dem Behälter 1 in vertikaler Richtung A auf und ab bewegbar. Der obere Rand des Behälters 1 definiert eine Arbeitsebene 5. Oberhalb der Arbeitsebene 5 ist eine Bestrahlungseinrichtung 6 in Form eines Lasers angeordnet, die einen gerichteten Laserstrahl 18 abgibt, der über eine Ablenkvorrichtung 7 auf die Arbeitsebene 5 abgelenkt wird. Ferner ist ein Beschichter 8 zum Aufbringen einer Schicht eines zu verfestigenden pulverförmigen Aufbaumaterials auf die Oberfläche des Trägers 2 oder eine zuletzt verfestigte Schicht vorgesehen. Der Beschichter 8 ist mittels eines durch die Pfeile B schematisch angedeuteten Antriebs über die Arbeitsebene 5 hin und her bewegbar. Durch zwei Dosierer 9 links und rechts vom Baufeld wird der Beschichter aus zwei Pulvervorratsbehältern 10 gespeist. Ferner sind links und rechts vom Baufeld zwei Überlaufbehälter 11 vorgesehen, die das beim Beschichten anfallende überschüssige Pulver aufnehmen können.

Die Vorrichtung weist außerdem eine über der Arbeitsebene 5 angeordnete Heizeinrichtung 12 zum Heizen des Pulverbetts 19 und insbesondere zum Vorerwärmen einer aufgetragenen aber noch nicht gesinterten, verfestigten Pulverschicht auf eine für das Sintern geeignete Arbeitstemperatur T_{A} auf. Die Heizeinrichtung 12 ist beispielsweise in Form eines oder einer Mehrzahl von Heizstrahlern, wie z.B. einem Infrarotstrahler, ausgebildet, der bzw. die so oberhalb der Arbeitsebene 5 angeordnet sind, dass die aufgetragene Pulverschicht gleichmäßig erwärmt werden kann.

In einem Abstand oberhalb der Arbeitsebene 5 ist eine Temperaturmesseinrichtung 13 vorgesehen, die zum berührungslosen Messen der Temperatur der zuletzt aufgetragenen bzw. obersten Pulverschicht dient. Dabei misst die Temperaturmesseinrichtung 13 die mittlere Temperatur in einem Messbereich 14, der eine kleinere Fläche einnimmt als die in dem Baufeld aufgetragene Pulverschicht. Die Lage des Messbereichs 14 der Temperaturmesseinrichtung 13 kann mit einer Lageeinstelleinrichtung 15 innerhalb der Arbeitsebene verändert werden.

Durch eine Prozesskammer 16 ist der Arbeitsbereich von der Umgebung abgeschlossen. Dadurch kann ggf. die Oxidation des Pulvers verhindert werden.

Eine Steuer- und/oder Regeleinrichtung 17 dient zum Steuern und/oder Regeln der Leistung der Heizeinrichtung 12, der Leistung der Bestrahlungseinrichtung 6, der Ablenkung durch die Ablenkeinrichtung 7 und zum Ansteuern der Lageeinstelleinrichtung 15 sowie zum Auslesen der von der Temperaturmesseinrichtung 13 gemessenen Temperatur des Pulverbettes 19. Dazu ist die Steuer-und/oder Regeleinrichtung 17 mit der Heizeinrichtung 12, der Temperaturmesseinrichtung 13, der Lageeinstelleinrichtung 15, der Ablenkeinrichtung 7 sowie mit der Bestrahlungseinrichtung 6 verbunden.

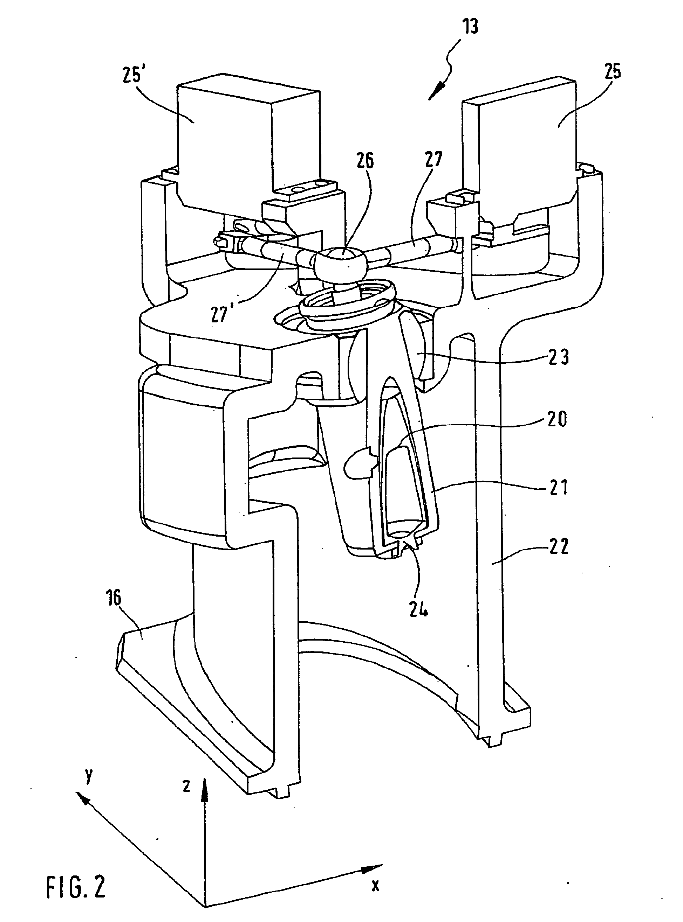

Fig. 2 zeigt eine Darstellung einer Ausführungsform der Temperaturmesseinrichtung und der Lageeinstelleinrichtung.

Die Temperaturmesseinrichtung 13 nach der Ausführungsform besteht aus einem in einem Gehäuse 21 vorgesehenem Punktpyrometer 20. Das Gehäuse 21 schützt das Punktpyrometer 20 vor mechanischen und thermischen Belastungen und ist mit der Wand 22 der Prozeßkammer 16 über ein Kugelgelenklager 23 verbunden. Durch ein Fenster 24 in dem Gehäuse 21 erfasst das Punktpyrometer 20 die Wärmestrahlung aus einem Messbereich 14 der obersten Pulverschicht. Zum Verhindern von Verschmutzung durch Prozessgase wird das Fenster 24 durch z.B. Stickstoffgas freigeblasen, sodass Prozessgase von diesem Fenster 24 ferngehalten werden können.

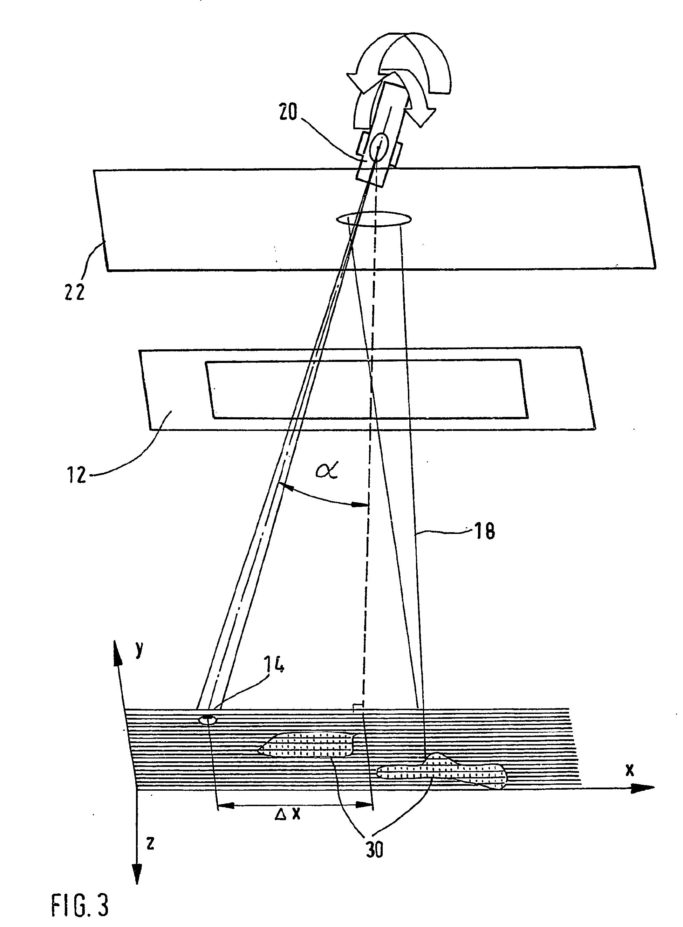

Der Messbereich des Punktpyrometers 20 kann durch Schwenken relativ zu der Arbeitsebene verändert werden. Das Schwenken des Punktpyrometers wird dabei durch zwei Servomotoren 25 und 25' realisiert, die mit zwei Servoarmen 27 und 27' an einem Angriffspunkt 26 des Gehäuses 21 des Punktpyrometers 20 angreifen. Mit dem Servomotor 25 wird das Gehäuse 21 des Punktpyrometer 20 um die Y-Achse geschwenkt und mit dem Servomotor 25' wird es um die X-Achse geschwenkt. Wie insbesondere in Fig. 3 zu sehen ist, wird durch Schwenken des Punktpyrometers 20 um die Y-Achse um einen Winkel α die Lage des Messbereichs 14 entlang der X-Achse um die Länge ΔX bewegt. Dementsprechend wird die Lage des Messbereichs durch Schwenken des Punktpyrometers 20 um die X-Achse entlang der Y-Achse bewegt. Auf diese Art und Weise kann die Lage des Messbereichs 14 des Punktpyrometers vollkommen unabhängig von der Lage des durch die Bestrahlungseinrichtung 6 in der Arbeitsebene erzeugten Strahlflecks verändert und eingestellt werden. Dies ist gleichbedeutend damit, dass zwischen der Lage des Messbereichs 14 und der Lage des Strahlflecks keine feste Lagebeziehung besteht.

Im Folgenden wird der Betrieb der zuvor beschriebenen Lasersintervorrichtung gemäß einem Verfahren nach einer ersten Ausführungsform beschrieben werden.

Zunächst wird eine erste Pulverschicht mit dem Beschichter 8 auf den Träger 2 aufgebracht.

Entscheidend für die Qualität des fertigen Objekts ist insbesondere, dass die Temperatur der zu verfestigenden obersten Pulverschicht eine Temperatur in einem bestimmten Bereich, dem Prozessfenster hat. Oberhalb dieses Prozessfensters wird das Pulver schon ohne zusätzliche Strahlungsenergie zumindest teilweise durch Sintern verfestigt, während sich bei Temperaturen unterhalb des Prozessfensters Verspannungen oder andere unerwünschte thermisch bedingte Effekte in der verfestigten Schicht ausbilden. Vielfach wird auch der sogenannte Curl-Effekt, bei dem sich die Ränder der verfestigten Schicht aufbiegen bzw. aufrollen, auf eine zu geringe Temperatur der obersten Pulverschicht zurückgeführt. Die mit dem Beschichter aufgebrachte Pulverschicht muss daher zum Erreichen guter Ergebnisse, insbesondere zum Vermeiden von Verspannungen in dem hergestellten Objekt, vor dem Verfestigen mit der Heizeinrichtung 12 auf eine Arbeitstemperatur T_{A} innerhalb des Prozessfensters erwärmt werden.

Dazu wird nach dem Aufbringen der Pulverschicht die Temperatur dieser Schicht berührungslos mit der Temperaturmesseinrichtung 13 gemessen. In Abhängigkeit von der dabei gemessenen Temperatur wird die Heizleistung der Heizeinrichtung 12 bestimmt. Die Lage des Messbereichs 14 der Temperaturmesseinrichtung 13 wird dabei mit der Lageeinstelleinrichtung 15 so eingestellt, dass der Messbereich 14 nicht mit einem Bereich 30 in der Schicht überlappt, der im nachfolgenden Schritt durch Bestrahlung mit dem Laser verfestigt wird. Es wird also bei dem Verfahren nach der ersten Ausführungsform in jeder Schicht vor dem Verfestigen dieser Schicht aktiv ein nicht zu belichtender Bereich für die Temperaturmessung der Oberfläche der obersten Pulverschicht angesteuert.

Bevorzugt wird der Messbereich bei der ersten Ausführungsform so gewählt, dass er einen vorbestimmten Abstand zu den zu belichtenden Bereichen in der Schicht, sowie zu belichteten Bereichen in unteren, bereits verfestigten Schichten hat. Je größer dieser vorbestimmte Abstand ist, umso geringer ist der Einfluss der belichteten Bereiche auf die Temperaturmessung. Insbesondere kann auch berücksichtigt werden, dass kompakte gesinterte Bereiche mehr Wärme halten und daher bei gleichem Abstand zu dem Messbereich die Temperaturmessung stärker beeinflussen als kleine gesinterte Strukturen.

Ist die oberste Pulverschicht auf die Arbeitstemperatur T_{A} erwärmt, so werden die dem Querschnitt des Objekts entsprechenden Stellen in der Pulverschicht durch Bestrahlen mit dem Laser verfestigt. Auch nach Erreichen der Arbeitstemperatur T_{A} wird während der Bestrahlung mit dem Laser weiterhin die Temperatur T der obersten Pulverschicht gemessen und in Abhängigkeit davon die Heizleistung der Heizeinrichtung 12 geregelt, um die Temperatur T in dem Prozessfenster zu halten.

Nach dem Verfestigen einer Schicht wird der Träger 2 um eine der Schichtdicke entsprechende Strecke abgesenkt und mit dem Beschichter 8 eine neue Pulverschicht auf die zuvor mit dem Laser belichtete Schicht aufgebracht. Dann werden die zuvor beschriebenen Schritte wiederholt bis die Herstellung des dreidimensionalen Objekts abgeschlossen ist.

Die Veränderung bzw. Einstellung der Lage des Messbereichs 14 in einer Schicht erfolgt nach der ersten Ausführungsform vor dem Verfestigen dieser Schicht und unabhängig von der Veränderung der Lage des Bereichs, auf den bei der Verfestigung der Schicht die elektromagnetische oder Teilchenstrahlung einwirkt (Strahlfleckbereich). Dies ist gleichbedeutend damit, dass während der Verfestigung der Schicht keine gleich bleibende, feste Lagebeziehung zwischen der Lage des Messbereichs 14 und der Lage des Strahlfleckbereichs besteht.

Dadurch, dass die Lage des Messbereichs der Temperaturmesseinrichtung in jeder Schicht in einem unbelichteten Bereich liegt, wird die Temperaturmessung nicht durch die Bestrahlung dieses Bereichs mit dem Laser gestört. Somit ist eine sehr genaue Regelung und/ oder Steuerung der Temperatur der obersten Pulverschicht möglich. Das Prozessfenster kann sehr gut eingehalten und dadurch können qualitativ hochwertige Objekte hergestellt werden.

Bei einer zweiten Ausführungsform des erfindungsgemäßen Verfahrens wird die Lage des Messbereichs auch während des Belichtens verändert. Dadurch wird in einer Schicht die Temperatur an verschiedenen Stellen gemessen und so eine Temperaturverteilung gemessen.

Die so gemessene Temperaturverteilung der Oberfläche der Pulverschicht wird von der Steuereinrichtung 17 für die Steuerung der mit der Laserstrahlung eingebrachten Energie durch Steuerung der lokalen Laserleistung der Bestrahlungseinrichtung 6 und/ oder durch Steuerung der Abtastgeschwindigkeit, mit der der gerichtete Laserstrahl durch die Ablenkvorrichtung 7 beim Belichten über das Baufeld bewegt wird, verwendet.

Wie bei der ersten Ausführungsform ist die Veränderung bzw. Einstellung der Lage des Messbereichs in einer Schicht unabhängig von der Veränderung der Lage des Strahlfleckbereichs.

Das erfindungsgemäße Verfahren nach der zweiten Ausführungsform hat den Vorteil, dass sich durch Messung der Temperaturverteilung in der Schicht lokale Temperaturerhöhungen der obersten Schicht feststellen lassen, die von benachbarten bereits belichteten Bereichen derselben Schicht oder von den belichteten Bereichen von Schichten unterhalb der obersten Schicht verursacht sind. Durch die Korrektur der lokalen Laserleistung der Bestrahlungseinrichtung 6 und/ oder durch Steuerung der Abtastgeschwindigkeit, mit der der gerichtete Laserstrahl durch die Ablenkvorrichtung 7 beim Belichten über das Baufeld bewegt wird, kann das Prozessfenster für die in das Pulver eingebrachte Energie genauer eingehalten werden und die Qualität der mit dem Verfahren hergestellten Objekte wesentlich verbessert werden.

Bevorzugt wird die Lage des Messbereichs während der Belichtung so verändert, dass er nicht mit einem Bereich in der Schicht überlappt, der gerade verfestigt wird oder bereits verfestigt wurde. So kann bei dem Verfahren nach der zweiten Ausführungsform wie bei dem der ersten Ausführungsform vermieden werden, dass die Temperaturmessung durch die Belichtung mit dem Laser gestört wird.

Alternativen und Abwandlungen der oben beschriebenen Vorrichtung und des oben beschriebenen Verfahrens sind möglich.

Die erfindungsgemäße Vorrichtung wurde so beschrieben, dass die Lage des Messbereichs der Temperaturmesseinrichtung durch Schwenken mit Servomotoren verändert wird. Die Lage des Messbereichs kann jedoch auch verändert werden, indem eine Plottermechanik vorgesehen ist, welche die Temperaturmessvorrichtung über der Arbeitsebene entlang der X- und/oder Y-Achse verfährt. Dies hat jedoch den Nachteil, dass die Plottermechanik für die Temperaturmessvorrichtung den Strahlweg des Lasers stören kann.

Eine weitere Möglichkeit, die Lage des Messbereichs der Temperaturmessvorrichtung in der Arbeitsebene zu verändern besteht darin, die Optik des Pyrometers, mit der die Wärmestrahlung aus dem Messbereich auf den eigentlichen Wärmestrahlungssensor in dem Pyrometer abgebildet wird, derart variabel vorzusehen, dass durch Verstellen der variablen Optik die Lage des Messbereichs verändert werden kann. Insbesondere kann die variable Optik einen schwenkbaren Spiegel enthalten, mit dem, je nach Winkelstellung des Spiegels, Wärmestrahlung aus verschiedenen Richtungen auf den Wärmestrahlungssensor in dem Pyrometer abgebildet werden kann.

Die erfindungsgemäße Vorrichtung wurde so beschrieben, dass ein Punktpyrometer als Temperaturmesseinrichtung verwendet wird. Genauso kann jedoch auch ein Mehrpunktpyrometer oder eine IR-Kamera verwendet werden, die einen relativ zum Baufeld kleineren Messbereich aufweist.

Es ist auch möglich, eine einzeilige CCD-Kamera mit einem entlang der X-Achse ausgedehnten Messbereich zu verwenden, wobei die Lage des Messbereichs entlang der Y-Achse veränderlich ist. Umgekehrt ist auch die Verwendung einer CCD-Kamera mit einem entlang der Y-Achse ausgedehnten Messbereich möglich, wobei die Lage des Messbereichs entlang der X-Achse veränderlich ist.

Anstatt den Laserstrahl mit einer Ablenkvorrichtung gezielt auf die Arbeitsebene abzulenken und auf verschiedene Stellen des Arbeitsbereiches zu richten kann auch das Objekt verfahrbar sein relativ zu dem Laser.

Der Beschichter wurde so beschrieben, dass er über die Arbeitsebene hin und her bewegbar ist. Alternativ kann das Aufbaumaterial auch aufgesprüht oder auf jede andere Art und Weise im Arbeitsbereich als Schicht aufgebracht werden.

Die Erfindung wurde anhand einer Lasersintervorrichtung beschrieben, bei der als Strahlungsquelle ein Laser verwendet wurde. Jede andere Strahlungsquelle, mit der elektromagnetische oder Teilchenstrahlung in das Aufbaumaterial eingebracht werden kann ist möglich. So kann z.B. eine Strahlungsquelle für inkohärente Lichtstrahlung, für IR-Strahlung, für Röntgenstrahlung oder für Elektronenstrahlung als Strahlungsquelle verwendet werden. Dementsprechend ist ein Aufbaumaterial zu verwenden, das mit der jeweiligen Strahlung verfestigt werden kann.

Bei der oben beschriebenen Vorrichtung wird als Heizeinrichtung ein Infrarotstrahler oberhalb der Arbeitsebene beschrieben. Andere Möglichkeiten, eine zuletzt aufgetragene Schicht des Aufbaumaterials zu erwärmen, sind denkbar. Z.B. kann die Zirkulation von warmer Luft oder Stickstoff zum Vorwärmen der Schicht verwendet werden, die über die frisch aufgetragene Schicht geleitet wird.

Es wurde beschrieben, die gemäß dem Verfahren nach der zweiten Ausführungsform gemessene Temperaturverteilung zur Steuerung der mit der Laserstrahlung eingebrachten Energie zu verwenden. Darüber hinaus kann die Temperaturverteilung auch dazu verwendet werden, eine Heizeinrichtung 12 zum Heizen der Oberfläche des Pulverbetts 19 anzusteuern. Insbesondere kann eine Heizeinrichtung 12 mit mehreren Zonen angesteuert werden, wobei jeder Zone der Heizeinrichtung 12 ein Teilbereich der gemessenen Temperaturverteilung zugeordnet ist, um so Temperaturunterschiede der Temperaturverteilung durch unterschiedlich hohe Leistungen der einzelnen Zonen ausgleichen.

Bei dem Verfahren nach der ersten oder zweiten Ausführungsform kann zusätzlich zu den dort beschriebenen Einstellungen oder Änderungen der Lage des Messbereichs 14 dieser während der Verfestigung auch zusätzlich derart verändert werden, dass der Messbereich 14 zeitweise mit Bereichen überlappt, die bereits verfestigt wurden oder gerade verfestigt werden. Die dabei gemessenen Temperaturen können zur Überprüfung und/oder Steuerung der Leistung der Bestrahlungseinrichtung 6 verwendet werden. Aus dem zeitlichen Verlauf der Temperatur eines zuvor belichteten Bereichs kann zudem auf die Wärmekapazität sowie auf die Wärmeleitung in X-/Y- bzw. in Z-Richtung geschlossen werden. Dabei sind die Wärmekapazität und die Wärmeleitung für die optimale Wahl der Prozessparameter, wie z.B. der Leistung oder der Abtastgeschwindigkeit der Verfestigungsstrahlung und der Regel-Parameter der Pulvervorwärmung, entscheidende Größen. Die Prozessparameter und damit die Qualität der Bauteile und die Bauzeit können daher in Abhängigkeit derartiger Temperaturmessungen optimiert werden.

## Patentansprüche

1. Vorrichtung zum Herstellen eines dreidimensionalen Objekts durch Verfestigen von Schichten eines Aufbaumaterials an den dem jeweiligen Querschnitt des Objekts entsprechenden Stellen durch Einwirken von elektromagnetischer oder Teilchenstrahlung mit:
einer Temperaturmesseinrichtung (13) zum berührungslosen Messen der Temperatur des Aufbaumaterials in einem Messbereich (14), der ein Teilbereich der Schicht des Aufbaumaterials ist, einer Lageeinstelleinrichtung (15) zum Ändern der Lage des Messbereichs (14) der Temperaturmesseinrichtung (13), **dadurch gekennzeichnet, daß** die Lageeinstelleinrichtung (15) unabhängig von der Veränderung der Lage des Bereichs, auf den die elektromagnetische oder Teilchenstrahlung einwirkt, ist.

2. Vorrichtung nach Anspruch 1, wobei die Lageeinstelleinrichtung (15) eine Schwenkvorrichtung (23, 25, 26)zum Verändern der Winkelstellung der Temperaturmesseinrichtung (13) relativ zu der Schicht des Aufbaumaterials enthält.

3. Vorrichtung nach Anspruch 1 oder 2, wobei die Lageeinstelleinrichtung (15) eine Mechanik enthält, mit der die Temperaturmesseinrichtung über der Schicht des Aufbaumaterials verfahren werden kann.

4. Vorrichtung nach einem der Ansprüche 1 bis 3, wobei die Lageeinstelleinrichtung (15) eine Optik enthält, mit der die aus dem Messbereich abgestrahlte Wärmestrahlung in die Temperaturmesseinrichtung (13) abgebildet wird und die Lage des Messbereichs (14) verändert werden kann.

5. Vorrichtung nach einem der Ansprüche 1 bis 4, wobei die Temperaturmesseinrichtung (13) ein Punktpyrometer ist.

6. Vorrichtung nach einem der Ansprüche 1 bis 5, weiter mit einer Steuereinrichtung (17), welche die Lageeinstelleinrichtung (15) derart ansteuert, dass der Messbereich (14) der Temperaturmesseinrichtung (13) nicht mit dem Bereich der Schicht überlappt, auf den gerade die elektromagnetische oder Teilchenstrahlung einwirkt.

7. Vorrichtung nach einem der Ansprüche 1 bis 6, weiter mit einer Steuereinrichtung (17), welche die einwirkende elektromagnetische oder Teilchenstrahlung in Abhängigkeit von der durch die Temperaturmesseinrichtung (13) gemessenen Temperatur steuert.

8. Vorrichtung nach einem der Ansprüche 1 bis 7, weiter mit einer Heizung für das Aufbaumaterial und
einer Steuereinrichtung (17), welche die Leistung der Heizung für das Aufbaumaterial in Abhängigkeit von der durch die Temperaturmesseinrichtung (13) gemessenen Temperatur steuert.

9. Vorrichtung nach einem der Ansprüche 1 bis 8, wobei die Vorrichtung eine Lasersintervorrichtung ist.

10. Verfahren zum Herstellen eines dreidimensionalen Objekts mit den Schritten:
(a) Auftragen einer Schicht eines durch elektromagnetische oder Teilchenstrahlung zu verfestigenden Aufbaumaterials auf eine Unterlage oder auf eine zuvor verfestigte Schicht;
(b) Verfestigen der Schicht des Aufbaumaterials durch Einwirken von elektromagnetischer oder Teilchenstrahlung an den dem Querschnitt des Objekts in der Schicht entsprechenden Stellen (30);
(c) Wiederholen der Schritte (a) und (b) bis das dreidimensionale Objekt (3) fertig gestellt ist,
wobei die Temperatur des Aufbaumaterials mit einer Temperaturmesseinrichtung (13) in einem Messbereich (14), der ein Teilbereich der Schicht ist, berührungslos gemessen wird, **dadurch gekennzeichnet, daß** die Lage des Messbereichs (14) mit einer Lageeinstelleinrichtung (15) unabhängig von der Veränderung der Lage des Bereichs, auf den die elektromagnetische oder Teilchenstrahlung in Schritt (b) einwirkt, eingestellt oder verändert wird.

11. Verfahren nach Anspruch 10, wobei die Lage des Messbereichs (14) mit einer Lageeinstelleinrichtung (15) derart eingestellt oder verändert wird, dass der Messbereich (14) nicht mit einem Bereich in der Schicht überlappt, der gerade verfestigt wird oder zuvor in dieser Schicht verfestigt wurde.

12. Verfahren nach Anspruch 10 oder 11, wobei die Lage des Messbereichs (14) derart eingestellt oder verändert wird, dass der Messbereich (14) nicht mit einem noch zu verfestigenden Bereich in der Schicht überlappt.

13. Verfahren nach einem der Ansprüche 10 bis 12, wobei das Aufbaumaterial geheizt wird und die dafür eingesetzte Heizleistung in Abhängigkeit von der durch die Temperaturmesseinrichtung (13) gemessenen Temperatur geregelt wird.

14. Verfahren nach einem der Ansprüche 10 bis 13, wobei die Temperatur des Aufbaumaterials in einer Schicht in mehreren voneinander verschiedenen Messbereichen gemessen wird.

15. Verfahren nach Anpspruch 14, wobei das Aufbaumaterial bereichsabhängig in mehreren den mehreren Messbereichen zugeordneten Heizbereichen geheizt wird, und
die Heizleistung für die verschiedenen Heizbereiche in Abhängigkeit von der Temperatur der zugeordneten Messbereiche geregelt oder gesteuert wird.

16. Verfahren nach einem der Ansprüche 10 bis 15, wobei der lokale Energieeintrag der Strahlungsenergie zum Verfestigen der Schicht in Abhängigkeit der durch die Temperaturmesseinrichtung (13) gemessenen Temperatur geregelt wird.

17. Verfahren nach einem der Ansprüche 10 bis 16, wobei die Lage des Messbereichs der Temperaturmesseinrichtung (13) durch Verändern der Winkelstellung (α) der Temperaturmesseinrichtung relativ zu der Schicht des Aufbaumaterials verändert wird.

18. Verfahren nach einem der Ansprüche 10 bis 17, wobei die Lage des Messbereichs (14) der Temperaturmesseinrichtung (13) durch Verfahren der Temperaturmesseinrichtung (13) in einer Ebene oberhalb des Aufbaumaterials verändert wird.

19. Verfahren nach einem der Ansprüche 10 bis 18, wobei die Lage des Messbereichs (14) der Temperaturmesseinrichtung (13) durch Verstellen einer variablen Optik verändert wird.

20. Verfahren nach einem der Ansprüche 10 bis 19, wobei die Einstellung der Lage des Messbereichs (14) weiter derart erfolgt, dass der Messbereich (14) einen vorbestimmten Abstand zu den zuvor verfestigten Bereichen in und unterhalb der obersten Schicht hat.

21. Verfahren nach einem der Ansprüche 10 bis 20, wobei pulverförmiges Aufbaumaterial und als Strahlungsquelle (6) ein Laser verwendet wird.

## Claims

1. An apparatus for the manufacture of a three-dimensional object by solidifying layers of a building material at the positions corresponding to the respective cross-section of the object, by the action of electromagnetic or particle radiation, comprising:
a temperature measuring assembly (13) for non-contact measurement of the temperature of the building material in a measurement region (14), which is a partial region of the layer of the building material,
a position adjustment device (15) for changing the position of the measurement region (14) of the temperature measuring assembly (13), **characterized in that** the position adjustment device (15) is independent of an alteration of the position of the region upon which said electromagnetic or particle radiation is acting.

2. An apparatus according to claim 1, wherein the position adjustment device (15) comprises a swivelling device (23, 25, 26) for changing the angular position of the temperature measuring assembly (13) in relation to the layer of the building material.

3. An apparatus according to claim 1 or 2, wherein the position adjustment device (15) comprises a mechanics, which can be used to move the temperature measuring assembly across the layer of the building material.

4. An apparatus according to one of claims 1 to 3, wherein the position adjustment device (15) comprises an optical system, which can be used to display the thermal radiation emitted from the measurement region in the temperature measuring assembly (13) and to alter the position of the measurement region (14).

5. An apparatus according to one of claims 1 to 4, wherein the temperature measuring assembly (13) is a point pyrometer.

6. An apparatus according to one of claims 1 to 5, further comprising a control device (17), which controls the position adjustment device (15) such that the measurement region (14) of the temperature measuring assembly (13) does not overlap with the region of the layer, upon which said electromagnetic or particle radiation is acting at the moment.

7. An apparatus according to one of claims 1 to 6, further comprising a control device (17), which controls the acting electromagnetic or particle radiation in dependence of the temperature measured by the temperature measuring assembly (13).

8. An apparatus according to one of claims 1 to 7, further comprising
a heating device for the building material, and
a control device (17), which controls the output of the heating device for the building material in relation to the temperature measured by the temperature measuring assembly (13).

9. An apparatus according to one of claims 1 to 8, wherein the apparatus is a laser sintering apparatus.

10. A method for the manufacture of a three-dimensional object, comprising the steps of:
(a) applying a layer of a building material to be solidified through electromagnetic or particle radiation, onto a base or a layer solidified before;
(b) solidifying the layer of the building material by exposure to electromagnetic or particle radiation at positions (30) in the layer that are corresponding to the cross-section of the object;
(c) repeating the steps (a) and (b) until the three-dimensional object (3) has been completed,
wherein the temperature of the building material is measured in a measurement region (14), which is a partial region of the layer, by means of a temperature measuring assembly (13) in a non-contact manner, **characterized in that** the position of the measurement region (14) is adjusted or altered by means of a position adjustment device (15) independently of any alteration of the position of the region upon which the electromagnetic or particle radiation acts in step (b).

11. A method according to claim 10, wherein the position of the measurement region (14) is adjusted or altered by means of a position adjustment device (15) such that the measurement region (14) does not overlap with a region in the layer that is being solidified at the moment or has been solidified before in this layer.

12. A method according to claim 10 or 11, wherein the position of the measurement region (14) is adjusted or altered such that the measurement region (14) does not overlap with a region in the layer that is still to be solidified.

13. A method according to one of claims 10 to 12, wherein the building material is heated and the heating output used to this end is regulated depending on the temperature measured by the temperature measuring assembly (13).

14. A method according to one of claims 10 to 13, wherein the temperature of the building material in a layer is measured in a plurality of measurement regions that are different from each other.

15. A method according to claim 14, wherein
the building material is heated in a plurality of heating regions allocated to the plurality of measurement regions in a region-dependent manner, and
the heating output for the various heating regions is regulated or controlled depending on the temperature of the measurement regions allocated.

16. A method according to one of claims 10 to 15, wherein the local energy introduction of radiation energy for solidifying the layer is regulated depending on the temperature measured by the temperature measuring assembly (13).

17. A method according to one of claims 10 to 16, wherein the position of the measurement region of the temperature measuring assembly (13) is altered by changing the angular position (α) of the temperature measuring assembly in relation to the layer of the building material.

18. A method according to one of claims 10 to 17, wherein the position of the measurement region (14) of the temperature measuring assembly (13) is altered by moving the temperature measuring assembly (13) in a plane above the building material.

19. A method according to one of claims 10 to 18, wherein the position of the measurement region (14) of the temperature measuring assembly (13) is altered by adjusting a variable optics.

20. A method according to one of claims 10 to 19, wherein the adjustment of the position of the measurement region (14) is furthermore achieved such that the measurement region (14) is spaced apart from the previously solidified regions in and underneath the uppermost layer by a predetermined distance.

21. A method according to one of claims 10 to 20, wherein use is made of a powder building material as well as of a laser as the source (6) of radiation.

## Revendications

1. Système pour la fabrication d'un objet tridimensionnel par solidification de couches d'un matériau solidifiable à des emplacements correspondant à la section de l'objet sous l'effet d'un rayonnement électromagnétique ou corpusculaire, avec :
un dispositif (13) de mesure de température pour la mesure sans contact de la température du matériau solidifiable dans une plage (14) de mesure qui soit une zone partielle de la couche du matériau solidifiable,
un dispositif (15) de réglage de position pour modifier la position de la plage (14) de mesure du dispositif (13) de mesure de température,
**caractérisé en ce que** le dispositif (15) de réglage de position est indépendant du changement de position de la plage sur laquelle agit le rayonnement électromagnétique ou corpusculaire.

2. Système selon la revendication 1, dans lequel le dispositif (15) de réglage de position comprend un dispositif (23, 25, 26) de pivotement pour modifier la position angulaire du dispositif (13) de mesure de température par rapport à la couche de matériau solidifiable.

3. Système selon la revendication 1 ou la revendication 2, dans lequel le dispositif (15) de réglage de position comprend un mécanisme au moyen duquel le dispositif de mesure de température peut être déplacé au-dessus de la couche de matériau solidifiable.

4. Système selon l'une des revendications 1 à 3, dans lequel le dispositif (15) de réglage de position comprend une optique au moyen de laquelle le rayonnement thermique émis depuis la plage de mesure est représenté dans le dispositif (13) de mesure de température, et la position de la plage (14) de mesure peut être modifiée.

5. Système selon l'une des revendications 1 à 4, dans lequel le dispositif (13) de mesure de température est un pyromètre ponctuel.

6. Système selon l'une des revendications 1 à 5, avec en outre un dispositif (17) de commande qui commande le dispositif (15) de réglage de position de manière que la plage (14) de mesure du dispositif (13) de mesure de température ne chevauche pas la zone de la couche sur laquelle le rayonnement électromagnétique ou corpusculaire est en train d'agir.

7. Système selon l'une des revendications 1 à 6, avec en outre un dispositif (17) de commande qui commande le rayonnement électromagnétique ou corpusculaire actif en fonction de la température mesurée par le dispositif (13) de mesure de température.

8. Système selon l'une des revendications 1 à 7, avec en outre un chauffage pour le matériau solidifiable et
un dispositif (17) de commande qui commande la puissance de chauffe pour le matériau solidifiable en fonction de la température mesurée par le dispositif (13) de mesure de température.

9. Système selon l'une des revendications 1 à 8, dans lequel le système est un système de frittage laser.

10. Procédé de fabrication d'un objet tridimensionnel avec les étapes suivantes :
(a) application d'une couche d'un matériau solidifiable par rayonnement électromagnétique ou corpusculaire sur un substrat ou sur une couche précédemment solidifiée ;
(b) solidification de la couche de matériau solidifiable sous l'effet de rayonnement électromagnétique ou corpusculaire sur les emplacements (30) correspondant à la section de l'objet dans la couche ;
(c) répétition des étapes (a) et (b) jusqu'à ce que l'objet (3) tridimensionnel soit réalisé,
dans lequel la température du matériau solidifiable est mesurée sans contact par un dispositif (13) de mesure de température dans une plage (14) de mesure qui soit une zone partielle de la couche,
**caractérisé en ce que** la position de la plage (14) de mesure est réglée ou modifiée par un dispositif (15) de réglage de position, indépendamment du changement de position de la plage sur laquelle agit le rayonnement électromagnétique ou corpusculaire en étape (b).

11. Procédé selon la revendication 10, dans lequel la position de la plage de mesure (14) est réglée ou modifiée par un dispositif (15) de réglage de position de manière que la plage (14) de mesure ne chevauche pas une zone de la couche qui est en train d'être solidifiée ou qui a été précédemment solidifiée dans cette couche.

12. Procédé selon la revendication 10 ou la revendication 11, dans lequel la position de la plage (14) de mesure est réglée ou modifiée de manière que la plage (14) de mesure ne chevauche pas une zone restant à solidifier dans la couche.

13. Procédé selon l'une des revendications 10 à 12, dans lequel le matériau solidifiable est chauffé, et la puissance de chauffe exigée à cet effet régulée en fonction de la température mesurée par le dispositif (13) de mesure de température.

14. Procédé selon l'une des revendications 10 à 13, dans lequel la température du matériau solidifiable dans une couche est mesurée dans plusieurs plages de mesure différentes entre elles.

15. Procédé selon la revendication 14, dans lequel le matériau solidifiable est chauffé par zones dans plusieurs zones de chauffe affectées aux plusieurs plages de mesure, et dans lequel la puissance de chauffe pour les différentes zones de chauffe est régulée ou commandée en fonction de la température des plages de mesure correspondantes.

16. Procédé selon l'une des revendications 10 à 15, dans lequel l'apport local d'énergie de rayonnement pour la solidification de la couche est régulé en fonction de la température mesurée par le dispositif (13) de mesure de température.

17. Procédé selon l'une des revendications 10 à 16, dans lequel la position de la plage de mesure du dispositif (13) de mesure de température est modifiée par rapport à la couche de matériau solidifiable par variation de la position angulaire (α) du dispositif de mesure de température.

18. Procédé selon l'une des revendications 10 à 17, dans lequel la position de la plage (14) de mesure du dispositif (13) de mesure de température est modifiée par déplacement du dispositif (13) de mesure de température sur un plan au-dessus du matériau solidifiable.

19. Procédé selon l'une des revendications 10 à 18, dans lequel la position de la plage (14) de mesure du dispositif (13) de mesure de température est modifiée par réglage d'une optique variable.

20. Procédé selon l'une des revendications 10 à 19, dans lequel le réglage de position de la plage (14) de mesure est en outre effectué de manière que la plage (14) de mesure soit à intervalle prédéfini des zones précédemment solidifiées, dans la couche supérieure et en dessous de celle-ci.

21. Procédé selon l'une des revendications 10 à 20, dans lequel du matériau solidifiable pulvérulent est utilisé, et un laser utilisé comme source (6) de rayonnement.
